## Europäisches Patentamt
## European Patent Office
## Office européen des brevets

(19)

(11) Veröffentlichungsnummer: **0 019 284 B1**

(12)
# EUROPÄISCHE PATENTSCHRIFT

(45) Veröffentlichungstag der Patentschrift:
**01.08.84**

(51) Int. Cl.³: **B 66 F 3/10**

(21) Anmeldenummer: **80102708.7**

(22) Anmeldetag: **16.05.80**

(54) **Hubvorrichtung mit zwei übereinander ausfahrbaren Gewindespindeln.**

(30) Priorität: **18.05.79 DE 2920133**

(43) Veröffentlichungstag der Anmeldung:
**26.11.80 Patentblatt 80/24**

(45) Bekanntmachung des Hinweises auf die Patenterteilung:
**01.08.84 Patentblatt 84/31**

(84) Benannte Vertragsstaaten:
**FR GB NL**

(56) Entgegenhaltungen:
**AT - B - 176 649**
**DE - C - 459 923**
**FR - A - 699 264**
**US - A - 1 420 113**
**US - A - 1 491 082**
**US - A - 1 518 490**
**US - A - 1 538 896**
**US - A - 1 708 717**
**US - A - 2 151 421**

(73) Patentinhaber: **Bautz, Alfred, Rheindahlener Strasse 84, D-4072 Wickrath/Niers (DE)**

(72) Erfinder: **Bautz, Alfred, Rheindahlener Strasse 84, D-4072 Wickrath/Niers (DE)**

(74) Vertreter: **Wangemann, Horst, Dipl.-Ing., Stresemannstrasse 28, D-4000 Düsseldorf (DE)**

## Beschreibung

Die Erfindung betrifft eine Hubvorrichtung mit zwei übereinander ausfahrbaren Gewindespindeln und mit diesen zusammenwirkenden, an den drehbaren Gewindespindeln längsverstellbaren undrehbaren Muttern, wobei die erste Gewindespindel angetrieben ist, der Antrieb der zweiten Gewindespindel über eine Gleitführung durch die erste Gewindespindel erfolgt, die zweite Gewindespindel sich auf der Mutter der ersten Gewindespindel abstützt und die Mutter der zweiten Gewindespindel eine heb- und senkbare Stützplatte am Kopf der Vorrichtung trägt.

Eine derartige Hubvorrichtung ist aus der US-A-1 708 717 bekannt. Diese Vorrichtung, die vorzugsweise als Autoheber Anwendung findet, weist eine Buchse mit einem Innengewinde auf, die als Mutter für die eine Spindel dient und sich über die Höhe der Vorrichtung in deren eingefahrenem Zustand erstreckt, wobei die drehfeste Verbindung zwischen den beiden Spindeln durch eine Mehrkantstange erfolgt, die in der hohlen, mit Mehrkantinnenquerschnitt versehenen, angetriebenen Spindel drehfest längsverschieblich ist. Für auf mehrere Meter, z.B. 4 bis 6 m, ausfahrbare Hubvorrichtungen mit zwei Spindeln bedarf es einer Buchse mit langem Innengewinde von 2 bis 3 m Länge, dessen Herstellungskosten erheblich sind. Das Drehmoment von der ersten Spindel muss auf die mit Innengewinde versehene Buchse durch die Mehrkantstange übertragen werden, die das Gewicht der Vorrichtung erhöht.

Durch die US-A-1 420 113 ist eine Stützvorrichtung bekannt, die mit einer äusseren und einer in ihrer Ausgangslage in diese äussere Spindel teleskopartig einfahrbaren inneren Spindel versehen ist, die über eine Federkupplung so lange drehsteif miteinander verbunden sind, wie keine Last auf der inneren Spindel ruht. Bei Verwendung als Hubvorrichtung ist die Hub- und Senkgeschwindigkeit auf die Bewegung der Mutter der äusseren Spindel beschränkt. Durch die DE-C-459 923 ist ein Teleskop-Spindel-Heber bekannt, der eine Innenspindel und eine mit einem Innenwie mit einem Aussengewinde versehene Spindel voraussetzt und deren Ausfahr- und Einfahrgeschwindigkeit dadurch gemindert ist, dass die Muttern der Spindel nacheinander und nicht gleichzeitig wirksam sind.

Diesen bekannten Hubvorrichtungen gegenüber liegt der Erfindung die Aufgabe zugrunde, eine Vorrichtung der beschriebenen Gattung zu schaffen, mit welcher eine grosse Ausfahrlänge von z.B. 4 bis 8 m möglich ist, die Herstellung der Vorrichtung sich hierfür einfacher gestaltet, das Gewicht herabgesetzt und eine raltiv hohe Aus- und Einfahrgeschwindigkeit durch das gleichzeitige Betätigen der beiden Spindeln und und der darauf angebrachten Muttern gegeben ist.

Zur Lösung dieser Aufgabe sieht die Erfindung vor, dass die erste Gewindespindel als innere Spindel und die zweite Gewindespindel als äussere Spindel ausgebildet und in ihrer Ausgangslage teleskopartig ineinander angeordnet sind, sich im wesentlichen über die Höhe der Hubvorrichtung in deren eingefahrenem Zustand erstrecken und durch eine Nut- und Federführung oder eine Mehrkantringführung an der Innenseite der äusseren und an der Aussenseite der inneren Spindel axial verschiebbar und drehfest miteinander verbunden sind und dass zwischen der Mutter der äusseren Spindel und der Stützplatte ein getrennter zylindrischer Abschnitt angeordnet ist.

In weiterer vorteilhafter Ausbildung weist die äussere Spindel an ihrer Innenseite eine Führungsnut auf, wobei das Gleitelement der Gleitführung am oberen Ende der inneren Gewindespindel angeordnet ist. Des weiteren trägt die Mutter der äusseren Spindel einen undrehbaren Mantel, der teleskopartig in einem mit der Mutter der inneren Spindel verbundenen Mantel verschiebbar ist.

Der Vorteil der Vorrichtung nach der Erfindung zeigt sich in der Anwendung nur zweier, mehrere Meter langer Spindeln, der entsprechend einfach ausgebildeten Muttern sowie eines zylindrischen Rohrstückes, wobei auf ein Innengewinde über mehrere Meter Länge an einem der Teile verzichtet wird. Der Mehrkantinnenquerschnitt der äusseren Spindel lässt sich durch eine in die Spindel eingesetzte und mit dieser verbundenen Hülse mit Innenmehrkant leicht und konstruktiv einfach herstellen. Das Aus- und Einfahren der Spindeln erfolgt derart, dass die Muttern beider Spindeln gleichzeitig betätigt werden. Die Ausfahrlänge der Hubvorrichtung nach der Erfindung setzt sich zusammen aus der Länge der beiden Spindeln, vermehrt um die Länge des zylindrischen Abschnitts, abzüglich der Höhe der Muttern.

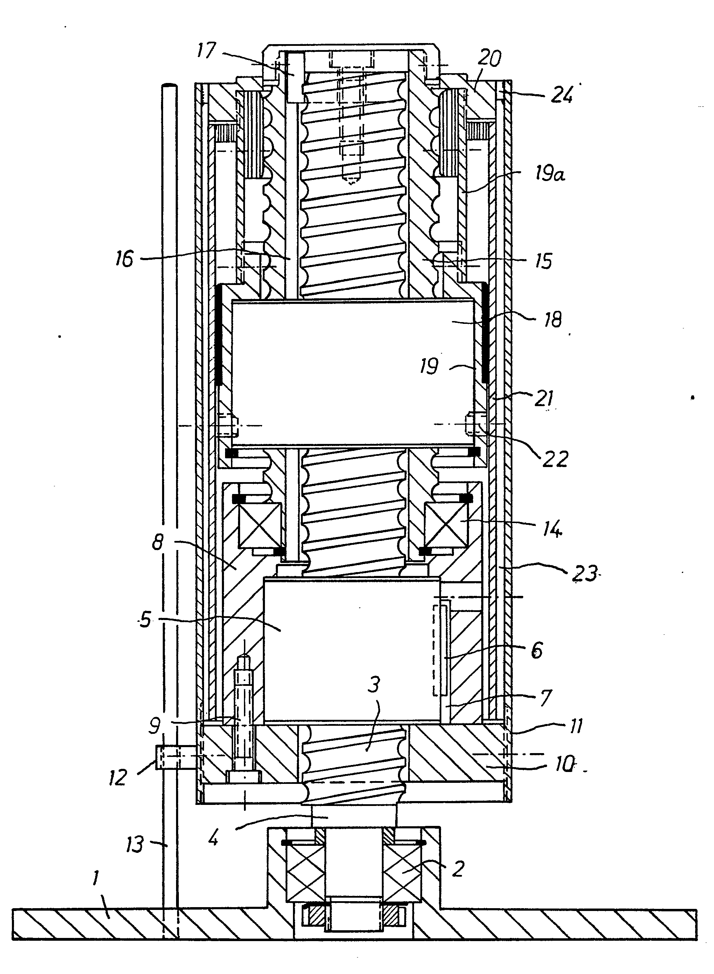

Die Zeichnung zeigt ein Ausführungsbeispiel der Vorrichtung nach der Erfindung. Bei der dargestellten Ausführungsform ist eine Grundplatte 1 vorgesehen, auf der mit Hilfe eines Axiallagers 2 die innere Gewindespindel 3 gelagert ist, die durch ein nicht dargestelltes Aggregat, beispielsweise bei 4, angetrieben werden kann. Auf der Spindel 3 ist eine entsprechende Mutter 5 angeordnet, die längsgesichert und über Feder 6 und Nut 7 mit einem Tragstück 8 verbunden ist, das seinerseits mittels Schrauben 9 an einem Ring 10 befestigt ist, der seinerseits einen Mantel 11 trägt. Dieser weist einen seitlichen gabelförmigen od.dgl. Ansatz 12 auf, der eine Stange 13 umfasst, die an der Grundplatte 1 befestigt ist und sich parallel zu der Gewindespindel 3 und über deren Länge erstreckt.

Das Tragstück 8 trägt ein Axiallager 14, auf dem sich die äussere, nicht angetriebene hohle Gewindespindel 15 abstützt, die ihrerseits an ihrer Innenseite eine Nut 16 aufweist, in die die Feder 17 am oberen Ende der inneren Gewindespindel 3 eingreift. Somit wird beim Drehen der inneren Gewindespindel 3 die äussere Gewindespindel 15 in Drehung versetzt und kann sich längsverstellen.

Auf der äusseren Gewindespindel 15 ist eine entsprechende Mutter 18 angeordnet, die ebenfalls drehfest in einer Büchse 19 gehalten ist, die über einen zylindrischen Abschnitt 19a die Stützplatte 20 trägt. Die Büchse 19 ist mit einem inneren Mantel 21 bei 22 drehfest verbunden, der undrehbar ist.

Beim Drehen der inneren Gewindespindel 3 wird deren Mutter 5 mit dem Tragstück 8 angehoben. Da die äussere Gewindespindel 15 über das Axiallager 14 sich auf dem nicht drehbaren Tragstück 8 abstützt, wird auch die äussere Gewindespindel 15 gehoben. Beim Drehen der inneren Spindel 3 wird gleichzeitig auch die äussere Spindel 15 über die Nut und Feder 16, 17 gedreht und hierdurch die undrehbare Mutter 18 ebenfalls gehoben, die ihrerseits die Stützplatte 20 anhebt.

Der innere Mantel 21 weist eine oder zwei Nuten 23 auf, in die ein Gleitstein 24 eingreift, der am oberen Ende des äusseren Mantels 11 angeordnet ist, der über den Ring 10 und die Stange 13 undrehbar ist. Die sich auf- und abwärts bewegende Mutter 18 wird hierdurch gegen Drehen gesichert, kann sich jedoch an der äusseren Gewindespindel 15 auf- und abwärts bewegen. Dieser Bewegung der Mutter 15 folgt der Mantel 21.

Die Beschreibung der dargestellten Ausführungsform der Vorrichtung nach der Erfindung lässt erkennen, dass die beiden Spindeln 3, 15 sich im eingefahrenen Zustand im wesentlichen über die Höhe der Hubvorrichtung erstrecken, wobei zu berücksichtigen ist, dass die Zeichnung eine verkürzte Darstellung der Vorrichtung wiedergibt.

Da der innere Mantel 21 bei Fortlassen oder Aussparen des äusseren Mantels 11 von der Seite her zugänglich ist, können mehrere Hubvorrichtungen gleicher Art durch an den Mänteln dieser Vorrichtungen seitlich angreifenden Verbindungstraversen verbunden werden, wodurch beispielsweise sperrige und schwere Gegenstände gemeinsam angehoben werden können, und hierbei eine besonders grosse Standfestigkeit der aus mehreren in Dreieck- oder Viereckform aufgestellten und an den genannten Teilen miteinander verbundenen Hubvorrichtungen erzielt werden kann.

Statt der Nut und Federführung zwischen den Spindeln 3, 15 kann auch eine Mehrkantringführung vorgesehen werden, wobei statt des Federteils 17 ein Mehrkantring an der Spindel 3 und statt der Nut 16 eine entsprechende Mehrkantführung in der Spindel 15 vorgesehen sind.

Der Fortfall einer Verbindungsstange zwischen der inneren und der äusseren Spindel zur Übertragung des Drehmomentes von der einen auf die andere Spindel hält das Gewicht der Vorrichtung gering; beide Spindeln, die sich im wesentlichen über die Höhe der Vorrichtung erstrecken, tragen einfach herzustellende Aussengewinde. Es werden teuere Innengewinde an längeren Vorrichtungsteilen vermieden.

## Patentansprüche

1. Hubvorrichtung mit zwei übereinander ausfahrbaren Gewindespindeln (3, 15) und mit diesen zusammenwirkenden, an den drehbaren Gewindespindeln längsverstellbaren undrehbaren Mutter (5, 18), wobei die erste Gewindespindel (3) angetrieben ist, der Antrieb der zweiten Gewindespindel (15) über eine Gleitführung (16, 17) durch die erste Gewindespindel (3) erfolgt, die zweite Gewindespindel (15) sich auf der Mutter (5) der ersten Gewindespindel (3) abstützt und die Mutter (18) der zweiten Gewindespindel (15) eine heb- und senkbare Stützplatte (20) am Kopf der Vorrichtung trägt, dadurch gekennzeichnet, dass die erste Gewindespindel als innere Spindel (3) und die zweite Gewindespindel als äussere Spindel (15) ausgebildet und in ihrer Ausgangslage teleskopartig ineinander angeordnet sind, sich im wesentlichen über die Höhe der Hubvorrichtung in deren eingefahrenem Zustand erstrecken und durch eine Nut- und Federführung (16, 17) oder eine Mehrkantringführung an der Innenseite der äusseren (15) und an der Aussenseite der inneren (3) Spindel axial verschiebbar und drehfest miteinander verbunden sind und dass zwischen der Mutter (18) der äusseren Spindel (15) und der Stützplatte (20) ein getrennter zylindrischer Abschnitt (19a) angeordnet ist.

2. Hubvorrichtung nach Anspruch 1, dadurch gekennzeichnet, dass die äussere Spindel (15) an ihrer Innenseite eine Führungsnut (16) aufweist und das Gleitelement (17) der Gleitführung (16, 17) am oberen Ende der inneren Gewindespindel (3) angeordnet ist.

3. Hubvorrichtung nach Anspruch 1, dadurch gekennzeichnet, dass die Mutter (18) der äusseren Spindel (15) einen undrehbaren Mantel (21) trägt, der teleskopartig in einem mit der Mutter (5) der inneren Spindel (3) verbundenen Mantel (11) verschiebbar ist.

## Claims

1. A lifting apparatus comprising two threaded rods (3 and 15), that are able to be moved outwards one over the other, lead nuts (5 and 18) able to be moved in the length direction on the turning threaded rods, said nuts being able to be placed on top of each other on the rods moving lengthways, but not being able to be twisted, the first threaded rod (3) being driven, the drive of the second threaded rod (15) being by way of a sliding guide (16 and 17) from the first threaded rod (3), the second threaded rod (15) being supported on the nut (5) of the first threaded rod (3) and the nut (18) of the second threaded rod (15) supporting a support plate (20), that may be lifted and lowered, on the head of the apparatus, characterized in that the fist threaded rod is in the form of an inner rod (3) and the second threaded rod is in the form of a outer rod (15) and in their starting position are telescoped one into the other, same running generally the full height of the lifting apparatus in its home position and are joined together in such a way that they may be slid axially but not twisted in relation to each other, by a groove and key guide means (16 and 17) or by polygonal ring guide on the inner face of the outer rod (15) and on the outer face of the inner rod (3), and in that between the nut (18) of the outer rod (15) and the support plate (20) there is a separate cylindrical part (19a).

2. The lifting apparatus as claimed in claim 1 characterized in that the outer rod (15) has a guide groove (16) on its inner face and the sliding element (17) of the sliding guide (16 and 17) is placed at the top end of the inner rod (3).

3. The lifting apparatus as claimed in claim 1 characterized in that the nut (18) on the outer rod (15) has a casing that is locked against twisting and may be telescoped in a casing (11) joined with the nut (5) of the inner rod (3).

**Revendications**

1. Dispositif de levage à deux branches filetées (3, 15) télescopiques l'une au-dessus de l'autre, dispositif muni de deux écrous (5, 18) réglables en longueur, fixe dans le sens rotatif et coopérant avec les deux broches filetées (3, 15), la première broche filetée (3) étant entraînée, l'entraînement de la deuxième broche (15) étant assuré par un guidage à glissière (16, 17) du fait de la première broche filetée (3), la deuxième broche (15) reposant sur l'écrou (5) de la première broche filetée (3) et l'écrou (18) de la deuxième broche filetée (15) supportant une plaque d'appui (20) déplaçable dans le sens vertical, à la tête du dispositif, caractérisé en ce que la première broche filetée est réalisée en tant que broche intérieure (3) et la deuxième broche filetée en tant que broche extérieure (15), montées dans leur position de départ l'une dans l'autre, s'étendant au-delà de la hauteur du dispositif de levage à l'état replié, broches qui sont reliées entre elles par un guidage à rainure et à ressort (16, 17) ou par un guidage à anneau polygonal au côté intérieur de la broche extérieure (15) et au côté extérieur de la broche intérieure (3) de façon à pouvoir être déplacées axialement sans tourner et en ce qu'une partie cylindrique (19a) séparée est mise en place entre l'écrou (18) de la broche extérieure (15) et la plaque d'appui (20).

2. Dispositif selon la revendication 1, caractérisé en ce que la broche extérieure (15) présente sur son côté intérieur une rainure de guidage (16) et que l'élément de glissement (17) de guidage (16, 17) est mis en place à l'extrémité supérieure de la broche intérieure (3).

3. Dispositif selon la revendication 1, caractérisé en ce l'écrou (18) de la broche extérieure (15) porte une enveloppe (21) non rotative qui est dé-plaçable télèscopiquement dans une enveloppe (11) reliée à l'écrou (5) de la broche intérieure (3).